# EUROPEAN PATENT SPECIFICATION

(11) **EP 3 337 655 B1**
(45) Date of publication and mention of the grant of the patent: **23.09.2020**
(21) Application number: 16837951.9
(22) Date of filing: 22.08.2016
(51) Int. Cl.: B29D 30/54, C08L 9/00, C08L 7/00, C08K 5/00, B29D 30/56, C09J 5/00, C09J 11/04, C09J 107/00, C09J 109/00, C08J 5/12, C08K 3/013, C08K 5/32

(54) **METHODS FOR RETREADING TIRES EMPLOYING CUSHION GUM WITH STABLE DINITRILE OXIDE CURE SYSTEM**
VERFAHREN ZUM RUNDERNEUERN VON REIFEN MIT DÄMPFGUMMI MIT STABILEM DINITRILOXID-HÄRTUNGSSYSTEM
PROCÉDÉS DE RECHAPAGE DE PNEUS À L'AIDE DE GOMME DE LIAISON AVEC UN SYSTÈME DE DURCISSEMENT À L'OXYDE DE DINITRILE STABLE

(30) Priority: 20.08.2015 US 201562207512 P
(43) Date of publication of application: 27.06.2018
(73) Proprietor: Bridgestone Americas Tire Operations, LLC, Nashville, TN 37201 (US)
(72) Inventor: BARNED, Robert, Akron, Ohio 44313 (US); ABELL, Joshua, Akron, Ohio 44313 (US); BENDER, David, Muscatine, Iowa 52761 (US)
(74) Representative: Kraus & Weisert Patentanwälte PartGmbB
(86) International application number: PCT/US2016/048013
(87) International publication number: WO 2017/031491

(56) References cited:
- JP-A- 2012 522 088
- US-A- 3 945 417
- US-A1- 2002 157 761
- US-A1- 2010 012 241
- US-A1- 2010 012 241
- US-A1- 2010 139 825
- US-A1- 2012 196 976

## Description

### FIELD OF THE INVENTION

Embodiments of the invention relate to methods for retreading a tire wherein the method employs the use of a cushion gum having a cure system including stable dinitrile oxide compound.

### BACKGROUND OF THE INVENTION

Retreaded tires have been available for many years and provide an economical way to gain additional use out of a tire casing after the original tread has become worn. Methods of retreading tires are used to extend the life of tires. By applying a new tread to a used tire casing, the life of the tire casing is extended. Retreaded tires often have to meet the same stringent quality standards as new tires and they additionally offer an economical and environmentally friendly alternative to new tires.

As is known in the art, the retreading process generally begins with removal of the remaining tread from the tire casing. This can be accomplished by a buffing machine that grinds away the old tread and leaves a buffed surface that is generally smooth about the circumference of the tire casing. Most often the buffed surface left behind includes portions of the undertread, and other times the buffed surface left behind even includes portions of the subtread, located below the tread and above the undertread. The buffed surface of the tire casing may then be examined for injuries and repaired.

After completion of the repairs, the buffed surface can receive a new tread. In one known process, the new tread, which is cured prior to applying the tread to the casing, is secured to the casing through a layer often referred to as a cushion gum or cushion gum layer. This cushion gum is an uncured rubber-containing composition that, upon curing, helps to mate the new tread to the tire casing.

In other processes, the cushion gum is applied to the back, i.e., the inside surface, of a new tread. The cushion gum and tread can then be applied in combination about the circumference of the tire casing to create an uncured retread tire composite that is ready for curing. The uncured retread tire composite is then placed within a flexible rubber envelope and an airtight seal is created between the envelope and the beads of the tire to create an enveloped tire assembly. The entire enveloped tire assembly is then placed within a curing chamber and is subjected to pressure and heat in order to effect curing of the cushion gum.

Logistically, the new tread is typically manufactured at a tread-making facility and shipped to a retreading facility where the new tread is applied to the casing. The cushion gum is likewise generally made a facility distinct from the retreading facility; e.g. it is prepared at a tread-making facility and shipped to the retreading facility.

In many processes, the cushion gum comprises a rubber component, a sulfur based cure system, reinforcing fillers, and other components when necessary. The cushion gum has a limited shelf life because of the presence of the sulfur based cure system; the uncured retread tire must be subjected to both heat and pressure in order to cure the cushion gum to the tread and the tire casing. Although limited, the shelf life of the cushion gum is relatively long because the sulfur-based cure systems require relatively high heat to be activated. However, typically the shelf life of the cushion gum is much shorter than the shelf life of the tread composite to which the cushion gum will eventually be secured. Furthermore, the cost of retreading a tire is affected by having to produce the cushion gum at a facility distinct from the retreading facility. The cost of retreading a tire is also affected by having to apply both heat and pressure to cure the cushion gum to the tread and the tire casing.

US 2012/196976 A1 describes the use of an adhesive composition between a vulcanized rubber part and an uncured or prevulcanized or vulcanized rubber part, based on at least one highly unsaturated elastomer chosen from the group formed by natural rubber, polyisoprene, polybutadiene, styrene-butadiene, styrene-isoprene and butadiene-isoprene copolymers and styrene-butadiene-isoprene terpolymers, an aliphatic solvent and a "curing" system comprising at least one stable aryl dinitrile oxide compound.

A desire therefore exists to improve upon the methods for retreading a tire, especially in regards to the preparation of the cushion gum and the treatment of the uncured retread tire composite.

### SUMMARY OF THE INVENTION

The present invention provides the process for retreading a tire as defined in claim 1.

### BRIEF DESCRIPTION OF THE DRAWINGS

Fig. 1 is a flow chart showing the method of retreading a tire according to one or more embodiments of the invention.
Fig. 2 is a cross-sectional view of a tire.
Fig. 3 is a sectional view of a cured rubber component according to one or more embodiments of the invention.

### DETAILED DESCRIPTION OF ILLUSTRATIVE EMBODIMENTS

Embodiments of the present invention are based, at least in part, upon the discovery of a retreading process that employs a cushion gum having a cure system that includes a stable dinitrile oxide compound. According to this invention, the cushion gum, which includes the stable dinitrile oxide compound, is prepared at the same location in which the process for retreading a tire takes place. As described in greater detail herein, because of the nature of the cure system, specifically the presence of the stable dinitrile oxide compound, the tread is able to be mated to the casing at ambient temperatures. Advantageously, this technique allows for the efficient mating of the tread to the casing to form a retread tire.

### RETREADING PROCESS

Except as provided herein, practice of one or more embodiments of the present invention is not necessarily limited by the retreading process used to ultimately produce a retread tire. Accordingly, processes generally known in the art may be used in the practice of this invention. In this regard, U.S. Patent Nos. 3,335,041, 3,421,565, 3,342,238, 3,514,423, 4,463,120, 4,539,365, and 8,143,338 may be referred to.

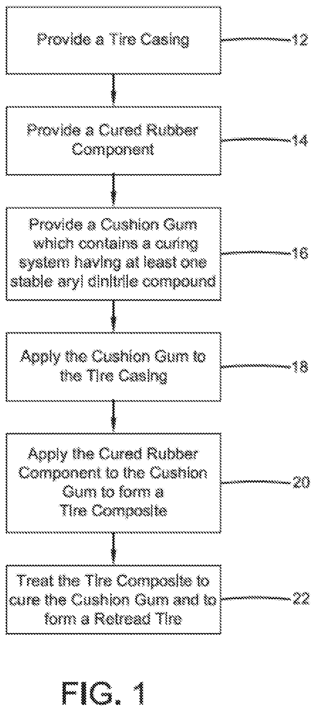

An exemplary process can be described with reference to Fig. 1, wherein the retreading process 10 includes: step 12 of providing a tire casing; step 14 of providing a cured rubber component having a first and second planar surface, wherein the first planar surface includes a tread pattern; step 16 of providing a cushion gum, wherein the cushion gum contains a cure system comprising a stable dinitrile oxide compound and wherein said step of providing a cushion gum includes preparing the cushion gum at the same location in which the process for retreading a tire takes place; step 18 of applying the cushion gum to the tire casing; step 20 of applying the second planar surface of the cured rubber component to the cushion gum to form a tire composite; and step 22 of allowing the cushion gum to cure and thereby form a retread tire.

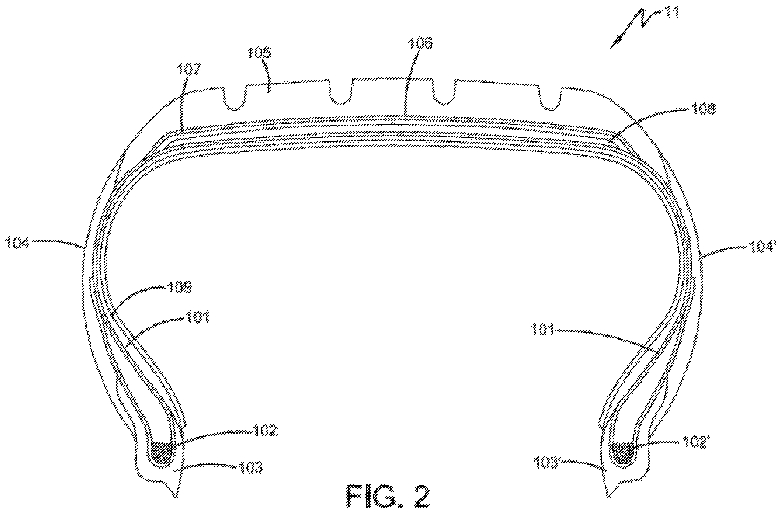

In one or more embodiments, step 12 of providing a tire casing includes collecting a tire, such as the tire 100 shown in Fig. 2, which is in the need of a new tread pattern. Step 12 of providing a tire casing may include preparing a tire casing with a buffed surface by buffing off the existing tread of the tire. With reference to Fig. 2, a typical tire 11 includes a carcass 101 extending between a pair of axially-spaced beads 102, 102'. Abrasion strips 103, 103' partially encase carcass 101 at or near beads 102, 102'. Tire 11 further includes opposing sidewalls 104, 104', and tread portion 105, which forms the outermost circumferential surface of tire 100. Subtread 106 is disposed below tread 105, undertread 107 is disposed below subtread 106, and belt package 108 is disposed below undertread 107. Belt package 108, which may include a plurality of belts (not shown), is positioned above carcass 101, which itself may include one or more body plies (not shown). Inner liner 109 is disposed on the interior of carcass 101 relative to the tread portion 105. As the skilled person will appreciate, tire 11 may also include various other components, which are not shown, such as, but not limited to, tread shoulders, cap plies, belt wedges, and belt shoulders.

Most often the buffed surface left behind includes portions of the undertread 107, and other times the buffed surface left behind even includes portions of the subtread 106. When the tread portion 105 is removed from the tire 11, the remaining substrate may be referred to as a tire casing.

In typical situations, step 12 of providing a tire casing may include an inspection of the tire casing. This may include manual inspection such as a visual inspection and a tactile inspection. In one or more embodiments, inspection can be performed using the assistance of equipment that can perform non-destructive testing. This equipment may include, for example, X-ray.

In one or more embodiments, cold process retreading is employed wherein a tire casing is provided by removing tire tread from a tire using a buffing machine, such as those machines manufactured by Bridgestone Commercial Solutions. During the buffing operation, the original tire tread is ground away from tire casing, thereby leaving a tire casing with a buffed surface. In one or more embodiments, only the tread portion 105 is ground away from the tire 11, leaving both the subtread 106 and the undertread 107 attached to the tire. In other embodiments, both the tread portion 105 and the subtread 106 are ground away from the tire 11, leaving only the undertread 107 attached to the tire 11. The buffed surface extends circumferentially about the tire casing and also extends transversely across the outside of the outer radial wall until it terminates at the buffed shoulder areas.

In one or more embodiments, step 12 of providing a tire casing may then include treating (e.g., spraying) the tire casing with a cement in order to assist in the subsequent application of the cushion gum. Various cements may be employed and this invention is not limited to any particular cement treatment.

In one or more embodiments, following the removal of the used tread layer, the tire casing may undergo repair. For example, the tire casing may undergo skiving and filling. Skiving is the removal of damaged material from a tire casing prior to making a repair. Often, a tire casing accumulates cuts, holes, nicks, or tears due to stones or other sharp objects that the tire comes in contact with during use. The injured or damaged area may be first ground smooth by an appropriate grinding tool and then filled with repair gum. It may be necessary to fill the injured areas to the level of the buffed surface to avoid air pockets between the buffed surface and the later applied tread layer because trapped air can have negative effects on the longevity of a typical retreaded tire.

In addition to skiving, which primarily addresses minor damage including non-penetrating injuries, the repair process may also include section repair wherein cables or other reinforcing elements of the tire casing are repaired. Also, repair may be made to penetrating injuries. Such repair may occur by using various plugs and patches to repair punctures in the tire casing.

In one or more embodiments, the tire casing is allowed to equilibrate at ambient indoor temperature and humidity for a period of time, or in other embodiments from about 10 to 15 hours. In one or more embodiments, visible surface moisture on the tire casing is removed, and holes or other damage to the tire casing are repaired.

In one or more embodiments, the tire casing may include natural and synthetic rubbers, which may also be referred to as elastomers. For example, the synthetic elastomers may include diene-based rubbers such as butadiene rubber, styrene-butadiene copolymer rubber, isoprene rubber, butyl rubber, halogenated butyl rubber, acrylonitrile-butadiene rubber, chloroprene rubber, styrene-isoprene-butadiene copolymer rubber, and isoprene-butadiene copolymer rubber. Other useful rubbers include ethylene-propylene-diene copolymer rubber, styrene-isoprene copolymer rubber, ethylene-propylene copolymer rubber, acrylic rubber, epichlorohydrin rubber, polysulfide rubber, silicone rubber, fluororubber, urethane rubber, and combinations thereof.

In one or more embodiments, the rubber component of the tire casing is a diene-based rubber. In these or other embodiments, the rubber component of the tire casing includes synthetic polyisoprene or natural rubber. In these or other embodiments, the rubber component of the tire casing contains at least about 50 wt. %; in other embodiments at least about 70 wt. %; and in yet other embodiments at least about 80 wt. % synthetic polyisoprene or natural rubber.

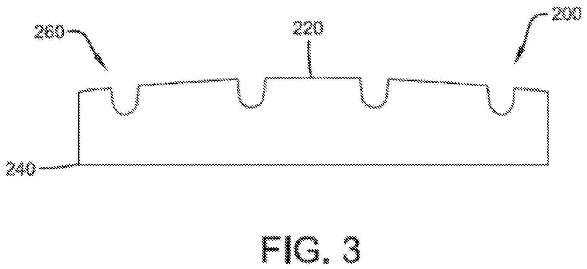

In one or more embodiments, step 14 of providing a cured rubber component includes providing a cured rubber component having first and second planar surfaces, wherein the first planar surface includes a tread pattern. Fig. 3 shows a cured rubber component 200. The cured rubber component 200 contains a first planar surface 220 and a second planar surface 240. The first planar surface includes a tread pattern 260 and in some embodiments, the second planar surface 240 is a smooth surface. In one or more embodiments, practice of the present invention is not necessarily limited by the selection of the cured rubber component 200, which may also be referred to as a pre-cured profiled tread strip or a tread substrate. Accordingly, the step of providing a cured rubber component 200 may rely on known techniques of the prior art, especially the known art relating to treads adapted for use in retreading operations. As is known in the art, the cured rubber component 200 may advantageously include a tread pattern 260 having varying topographies and/or designs. In one or more embodiments, the cured rubber component 200 may be formed by methods known to those skilled in the art including, but not limited to, curing with a flat molding press. Cured rubber components useful in practice of the present invention include those described in U.S. Pat. Nos. 3,951,720, 4,075,047, 4,046,947, and 8,298,463, as well as EP 0989171.

As generally known in the art, the cured rubber component 200 will have a first planar surface 220 opposite a second planar surface 240. The first planar surface 220 may be integral with the second planar surface 240 to the extent that both the first planar surface 220 and the second planar surface 240 both derive from the same extrudate, or in other embodiments the second planar surface 240 may derive from one or more additional rubber layers mated to the first planar surface 220. In one or more embodiments, the first planar surface 220 includes a tread portion 260.

In one or more embodiments, the cured rubber component 220 may be formed from rubber compounds including a variety of crosslinkable rubbers such as, but not limited to, natural rubber, synthetic polyisoprene, polybutadiene, butadiene-isoprene copolymers, rubbery copolymers of butadiene and styrene, rubbery copolymers of butadiene and acrylonitrile, rubbery copolymers of isoprene and isobutylene, polychloroprene, ethylene-propylene rubbers, and the like.

In one or more embodiments, the rubber component of the cured rubber component 220 tire casing is a diene-based rubber. In these or other embodiments, the rubber compound of the cured rubber component 220 includes synthetic polyisoprene or natural rubber. In these or other embodiments, the cured rubber component contains at least about 50 wt. %; in other embodiments at least about 70 wt. %; and in yet other embodiments at least about 80 wt. % synthetic polyisoprene or natural rubber.

In one or more embodiments, step 16 of providing a cushion gum, which may also be referred to as a cushion gum composition, includes providing a cushion gum containing a cure system, wherein the cure system contains at least one stable dinitrile oxide compound.

In one or more embodiments, step 16 of providing a cushion gum includes the step of manufacturing the cushion gum. The manufacturing process for the cushion gum is a process for preparing the cushion gum using a cushion gum composition.

The manufacturing process for the cushion gum is not particularly limited, and may be selected as appropriate depending upon the application thereof. In one or more embodiments, the cushion gum is manufactured by the processes selected from the group consisting of forming a sheet using a rolling roll or extrusion.

The shape of the cushion gum is not particularly limited, and may be selected as appropriate depending on the application thereof. In one embodiment, the cushion gum is shaped in the form of a sheet.

Regardless of what process is used to manufacture the cushion gum, the process to prepare the cushion gum advantageously takes place at the same location in which the process for retreading the tire takes place. The process used to manufacture the cushion gum desirably takes place at the same location in which the process for retreading the tire takes place because the cure system present in the cushion gum composition has a limited shelf life. That shelf life is defined as the time it takes for the cushion gum to loss its tack or its ability to adhere to both the tire casing and the cured rubber component. The shelf life of the cushion gum begins at the time the cushion gum composition is formed and ends when the cushion gum loses its tack.

In one embodiment, the cushion gum is manufactured by extrusion. For example, the cushion gum composition may be extruded through an extruder to form a cushion gum extrudate. The cushion gum extrudate is then applied to the tire casing. In other embodiments the cushion gum is applied directly to the cured rubber component. In another embodiment, the cushion gum is extruded directly on to the tire casing. In yet other embodiments, the cushion gum may be prepared by rubber calendaring techniques.

In one or more embodiments, the cushion gum is prepared by combining a vulcanizable rubber, a filler, and a stable nitrile oxide compound. Additionally, other ingredients that are used in formulating rubber compositions may optionally be included.

In one or more embodiments, the rubber component of the cushion gum composition may include natural and synthetic rubbers, which may also be referred to as elastomers. For example, the synthetic elastomers may include diene-based rubbers such as butadiene rubber, styrene-butadiene copolymer rubber, isoprene rubber, butyl rubber, halogenated butyl rubber, acrylonitrile-butadiene rubber, chloroprene rubber, styrene-isoprene-butadiene copolymer rubber, and isoprene-butadiene copolymer rubber. Other useful rubbers include ethylene-propylene-diene copolymer rubber, styrene-isoprene copolymer rubber, ethylene-propylene copolymer rubber, acrylic rubber, epichlorohydrin rubber, polysulfide rubber, silicone rubber, fluororubber, urethane rubber, and combinations thereof. These rubber components may be selected as appropriate in order to obtain high adhesiveness, depending on the content of the rubber compounds which make up the cured rubber component and the rubber compounds which make up the tire casing.

In one or more embodiments, the rubber component of the cushion gum composition is a diene-based rubber. In these or other embodiments, the rubber component of the cushion gum composition includes synthetic polyisoprene or natural rubber. In these or other embodiments, the cushion gum composition contains at least about 50 wt. %; in other embodiments at least about 70 wt. %; and in yet other embodiments at least about 80 wt. % synthetic polyisoprene or natural rubber.

In one or more embodiments, the cure system of the cushion gum composition comprises a nitrile oxide compound, such as a stable dinitrile oxide compound. In one embodiment, the stable dinitrile oxide compound is a stable aryl dinitrile oxide compound. In one embodiment, the stable aryl dinitrile is selected from the group consisting of mesitylene dinitrile oxide (MDNO) and bismesitylene dinitrile oxide (BMNO).

Practice of one or more embodiments of the present invention is not necessarily limited by the method of producing the stable dinitrile oxide compound. Accordingly, the stable dinitrile oxide compound is produced by various known methods, such as those methods taught by U.S. Patent Application No. 2012/0196976 and U.S. Patent No. 6,355,826.

In one or more embodiments, the reinforcing filler of the cushion gum composition may include carbon black, inorganic fillers, and/or combinations thereof. The content of the reinforcing filler is not particularly limited, and may be selected as appropriate depending on the application thereof.

In one or more embodiments, the reinforcing filler is an inorganic filler. The inorganic filler is not particularly limited, and may be selected as appropriate depending on the application thereof. In one embodiment, the inorganic filler is selected from the group consisting of silica, aluminum hydroxide, clay, alumina, talc, mica, kaolin, glass balloon, glass beads, calcium carbonate, magnesium carbonate, magnesium hydroxide, calcium carbonate, magnesium oxide, titanium oxide, potassium titanate, barium sulfate, and combinations thereof. In some embodiments, when using an inorganic filler, a silane coupling agent may be used as appropriate.

In one or more embodiments, the reinforcing filler is carbon black. The carbon black may be selected as appropriate depending on the application thereof. In one embodiment, the carbon black is selected from the group consisting of carbon black of HAF, FF, FEF, GPF, SRF, FT grades, and combinations thereof.

In one or more embodiments, the cushion gum composition comprises other components when necessary. In one embodiment, the other components are selected from the group consisting of a tackifier, a reinforcing agent, a softening agent, a filler, a vulcanizing aid, a colorant, a flame retardant, a lubricant, a foaming agent, a plasticizer, a processing aid, an antioxidant, an age resister, an ultraviolet rays protecting agent, an antistatic agent, a color protecting agent, and combinations thereof.

In one or more embodiments, the cushion gum composition may include from about 10 to about 120 parts by weight filler per 100 parts by weight rubber, in other embodiments from about 20 to about 100 parts by weight filler per 100 parts by weight rubber, and in other embodiments from about 30 to about 80 parts by weight filler per 100 parts by weight rubber.

In one or more embodiments, the cushion gum composition may include from about 1 to about 20 parts by weight dinitrile oxide per 100 parts by weight rubber, in other embodiments from about 2 to about 15 parts by weight dinitrile oxide per 100 parts by weight rubber, and in other embodiments from about 5 to about 10 parts by weight dinitrile oxide per 100 parts by weight rubber.

In one or more embodiments, step 18 includes applying the cushion gum to the tire casing. In one or more embodiments, the cushion gum is applied to the tire casing using a building machine, such as those available from Bridgestone Commercial Solutions.

In one or more embodiments, wherein the cushion gum is applied in the form of a calendared sheet or extrudate, the cushion gum and the cured rubber component 200 can be applied at the same machine, as described later. Although the layer of cushion gum can be applied to the tire casing in a variety of ways, in one embodiment, a roll of the cushion gum is rotatably mounted on a building machine and the layer of the cushion gum moves about a tensioning roller prior to being wrapped circumferentially around the buffed surface of the tire casing. In one or more embodiments, the cushion gum may be prepared by extrusion and applied directly to the casing.

In these or other embodiments, the step of applying a cushion gum to the tire casing further may include applying a layer of unheated cushion gum directly to the buffed surface. Tension may be used to stretch the layer of unheated cushion gum to facilitate conformation to the buffed surface. Thereafter, the layer of cushion gum may be stitched to force air from between the casing and the layer of cushion gum.

In one or more embodiments, the cushion gum may be applied to the buffed surface of the tire casing within eight hours of buffing. Additionally, the cushion gum may be applied under tension in the circumferential direction. Depending on the application, it may be desirable to slightly stretch the cushion gum to achieve better adherence to the buffed surface of the tire casing. Typically, the cushion gum is cut transversely, and the cut edge is spliced with the leading edge so there is no gap between the beginning and the end of cushion gum.

In one or more embodiments, the cushion gum is extruded directly onto the tire casing. In other embodiments, the cushion gum is extruded onto a transfer film, and then the transfer film is used to apply the extrudate directly to the tire casing, before an appreciable amount of curing takes place, and the transfer film is then removed.

In one or more embodiments, the cushion gum may be applied to the tire casing and trimmed to size. The resulting "cushioned" tire casing is then paired with the cured rubber component 200 and subjected to a treatment, as described later.

In certain embodiments, after the cushion gum is applied to the tire casing, a layer is stitched, or in other words pressed, against the applied cushion gum to drive out any air trapped between the cushion gum and the buffed surface of the casing. Following stitching, if a top layer of plastic is present over the cushion gum, the top layer of plastic is removed from the cushion gum to permit a cured rubber component 200 to later be applied over the cushion gum.

In one or more embodiments, step 20 includes applying a cured rubber component 200 to the cushion gum to form a tire composite. In one or more embodiments, both the cured rubber component 200 and optionally the cushion gum are applied using the same building machine. In one or more embodiments, said step of treating the tire composite to cure the cushion gum further may include encasing the tire composite in an envelope.

In one or more embodiments, step 20 includes applying the second planar surface 240 of the cured rubber component 200 against the exposed portion of the cushion gum. By applying the second planar surface 240 of the cured rubber component 200 against the exposed portion of the cushion gum, the first planar surface 220 including the tread pattern 260 is placed on the outside of the tire composite.

In one or more embodiments, the cured rubber component 200 is also applied with the assistance of a building machine that differs from the building machine used to apply the cushion gum. When using a building machine, the cured rubber component 200 may be guided onto the tire casing against the cushion gum by guide rollers.

The tire casing is rotated on a building machine until a sufficient length of the cured rubber component 200 is unraveled from a cured rubber component roll to extend about the circumference of the tire casing. If a release liner is used over the cushion gum, it would be removed prior to this step. The cured rubber component 200 is then cut generally transversely to the circumferential direction, and the cut end is butted up against the leading edge of the cured rubber component 200 to form a splice. The cured rubber component splice is often held together by a plurality of staples. In one or more embodiments, a spliced area of cushion gum and a spliced area of the cured rubber component 200 may be disposed at different points along buffed surface of the tire casing. Once both the cushion gum and the cured rubber component 200 are applied on the tire casing, an untreated tire composite is formed.

In one or more embodiments, step 22 includes treating the tire composite to cure the cushion gum and to form a retread tire. In one or more embodiments, after application of the cushion gum and the cured rubber component 200 to the tire casing, an untreated tire composite is formed and is ready for treatment under appropriate temperature and pressure conditions.

In one or more embodiments, step 22 of treating the tire composite includes placing the tire composite into a rubberized curing envelope designed for the particular tire type and size being retreaded. The envelope is sealed to the beads of the tire casing. The rubberized curing envelope is then subjected to pressure so as to ensure that the tread conforms to the compound outer curvature of the casing. In one or more embodiments, the pressure applied is about 70 PSI to about 100 PSI relative to atmospheric, in other embodiments from about 80 PSI to about 95 PSI relative to atmospheric, and in yet other embodiments from about 85 PSI to about 90 PSI relative to atmospheric.

In one or more embodiments, step 22 of treating the untreated tire composite takes places at an ambient operating temperature. In one or more embodiments, the operating temperature is between about 10 °C and about 60 °C, in other embodiments between about 15 °C and about 50 °C, and in yet other embodiments between about 18 °C and about 45 °C.

The time required or desired to treat the tire composite will depend on the treatment conditions. After the treatment is complete, the pressure on the curing envelope is returned to atmospheric, and a fully functional retread tire is formed.

Practice of one or more embodiments of the present invention is not necessarily limited by the particular type of rubberized curing envelope used. Accordingly, the known types of rubberized curing envelopes are used, such as those envelopes taught by U.S. Patent Application No. 2014/0008005.

Various modifications and alterations will become apparent to those skilled in the art.

## Claims

1. A process for retreading a tire, the process comprising the steps of:
(i) providing (12) a tire casing;
(ii) providing (14) a cured rubber component (200) having first (220) and second (240) planar surfaces;
(iii) providing (16) a cushion gum, wherein the cushion gum contains a cure system comprising at least one stable aryl dinitrile oxide compound, **characterised in that** said step of providing a cushion gum includes preparing the cushion gum at the same location in which the process for retreading a tire takes place;
(iv) applying (18) the cushion gum to the tire casing; and
(v) forming (20) a tire composite by applying the second planar surface (240) of the cured rubber component (200) to the cushion gum.

2. The process of claim 1 further comprising the step of treating (22) the tire composite to form a retread tire.

3. The process of any of the preceding claims, wherein the first planar surface (220) includes a tread pattern (260).

4. The process of any of the preceding claims, wherein the at least one stable aryl dinitrile oxide compound is selected from the group consisting of mesitylene dinitrile oxide (MDNO) and bismesitylene dinitrile oxide (BMNO).

5. The process of any of the preceding claims, wherein the cured rubber component (200) contains at least about 50 wt. % synthetic polyisoprene or natural rubber.

6. The process of any of the preceding claims, where said step of providing (16) a cushion gum includes extruding a cushion gum composition to form the cushion gum.

7. The process of any of the preceding claims, wherein the cushion gum contains at least about 50 wt. % synthetic polyisoprene or natural rubber.

8. The process of any of the preceding claims, wherein the tire casing contains at least about 50 wt. % synthetic polyisoprene or natural rubber.

9. The process of any of the preceding claims, wherein said step of treating the tire composite to form a retread tire comprises encasing the tread composite in an envelope; placing the enveloped tire composite in a pressure chamber; and applying pressure to the enveloped tire composite to form a retread tire.

10. The process of any of the preceding claims, wherein said step of treating (22) the tire composite takes place at a temperature of between about 10 °C and about 60 °C.

## Patentansprüche

1. Verfahren zum Runderneuern eines Reifens, wobei das Verfahren die Schritte umfasst:
(i) Bereitstellen (12) einer Reifenkarkasse;
(ii) Bereitstellen (14) einer gehärteten Kautschukkomponente (200) mit ersten (220) und zweiten (240) planaren Oberflächen;
(iii) Bereitstellen (16) eines Dämpfgummis, wobei der Dämpfgummi ein Härtungssystem enthält, das mindestens eine stabile Aryldinitriloxidverbindung umfasst, **dadurch gekennzeichnet, dass**
der Schritt des Bereitstellens eines Dämpfgummis die Herstellung des Dämpfgummis an der gleichen Stelle einschließt, an der das Verfahren zum Runderneuern eines Reifens erfolgt;
(iv) Anwenden (18) des Dämpfgummis auf die Reifenkarkasse; und
(v) Bilden (20) eines Reifenverbunds durch Aufbringen der zweiten planaren Oberfläche (240) der gehärteten Kautschukkomponente (200) auf den Dämpfgummi.

2. Verfahren nach Anspruch 1, ferner umfassend den Schritt des Behandelns (22) des Reifenverbunds zum Bilden eines runderneuerten Reifens.

3. Verfahren nach einem der vorstehenden Ansprüche, wobei die erste planare Oberfläche (220) ein Laufflächenprofil (260) einschließt.

4. Verfahren nach einem der vorstehenden Ansprüche, wobei die mindestens eine stabile Aryldinitriloxidverbindung aus der Gruppe ausgewählt ist, die aus Mesitylen-Dinitriloxid (MDNO) und Bismesitylen-Dinitriloxid (BMNO) besteht.

5. Verfahren nach einem der vorstehenden Ansprüche, wobei die gehärtete Kautschukkomponente (200) mindestens etwa 50 Gew.-% synthetisches Polyisopren oder Naturkautschuk enthält.

6. Verfahren nach einem der vorstehenden Ansprüche, wobei der Schritt des Bereitstellens (16) eines Dämpfgummis das Extrudieren einer Dämpfgummizusammensetzung zum Bilden des Dämpfgummis einschließt.

7. Verfahren nach einem der vorstehenden Ansprüche, wobei der Dämpfgummi mindestens etwa 50 Gew.-% synthetisches Polyisopren oder Naturkautschuk enthält.

8. Verfahren nach einem der vorstehenden Ansprüche, wobei die Reifenkarkasse mindestens etwa 50 Gew.-% synthetisches Polyisopren oder Naturkautschuk enthält.

9. Verfahren nach einem der vorstehenden Ansprüche, wobei der Schritt des Behandelns des Reifenverbunds zum Bilden eines runderneuerten Reifens das Umhüllen des Laufflächenverbunds in einer Umhüllung; Einbringen des umhüllten Reifenverbunds in eine Druckkammer; und Aufbringen von Druck auf den umhüllten Reifenverbund, um einen runderneuerten Reifen zu bilden, umfasst.

10. Verfahren nach einem der vorstehenden Ansprüche, wobei der Schritt des Behandelns (22) des Reifenverbunds bei einer Temperatur zwischen etwa 10 °C und etwa 60 °C erfolgt.

## Revendications

1. Procédé de rechapage d'un pneu, le procédé comprenant les étapes consistant à :
(i) fournir (12) une carcasse de pneu ;
(ii) fournir (14) un composant de caoutchouc durci (200) ayant des première (220) et deuxième (240) surfaces planes ;
(iii) fournir (16) une gomme de pied, dans lequel la gomme de pied contient un système de durcissement comprenant au moins un composé d'oxyde d'aryl-dinitrile stable, **caractérisé en ce que**
ladite étape de fourniture d'une gomme de pied inclut la préparation de la gomme de pied au même endroit que celui dans lequel le procédé de rechapage d'un pneu se déroule ;
(iv) appliquer (18) la gomme de pied à la carcasse de pneu ; et
(v) former (20) un composite de pneu en appliquant la deuxième surface plane (240) du composant de caoutchouc durci (200) à la gomme de pied.

2. Procédé selon la revendication 1 comprenant en outre l'étape de traitement (22) du composite de pneu pour former un pneu rechapé.

3. Procédé selon l'une quelconque des revendications précédentes, dans lequel la première surface plane (220) inclut une sculpture de bande de roulement (260).

4. Procédé selon l'une quelconque des revendications précédentes, dans lequel l'au moins un composé d'oxyde d'aryl-dinitrile stable est choisi dans le groupe constitué d'oxyde de mésitylène-dinitrile (MDNO) et d'oxyde de bismésitylène-dinitrile (BMNO).

5. Procédé selon l'une quelconque des revendications précédentes, dans lequel le composant de caoutchouc durci (200) contient au moins environ 50 % en poids de polyisoprène synthétique ou de caoutchouc naturel.

6. Procédé selon l'une quelconque des revendications précédentes, où ladite étape de fourniture (16) d'une gomme de pied inclut l'extrusion d'une composition de gomme de pied pour former la gomme de pied.

7. Procédé selon l'une quelconque des revendications précédentes, dans lequel la gomme de pied contient au moins environ 50 % en poids de polyisoprène synthétique ou de caoutchouc naturel.

8. Procédé selon l'une quelconque des revendications précédentes, dans lequel la carcasse de pneu contient au moins environ 50 % en poids de polyisoprène synthétique ou de caoutchouc naturel.

9. Procédé selon l'une quelconque des revendications précédentes, dans lequel ladite étape de traitement du composite de pneu pour former un pneu rechapé comprend l'enfermement du composite de bande de roulement dans une enveloppe ; la mise en place du composite de pneu enveloppé dans une chambre de pression ; et l'application de pression au composite de pneu enveloppé pour former un pneu rechapé.

10. Procédé selon l'une quelconque des revendications précédentes, dans lequel ladite étape de traitement (22) du composite de pneu se déroule à une température comprise entre environ 10 °C et environ 60 °C.
